# FASCICULE DE BREVET EUROPEEN

(11) **EP 3 898 339 B1**
(45) Date de publication et mention de la délivrance du brevet: **14.09.2022**
(21) Numéro de dépôt: 19832312.3
(22) Date de dépôt: 16.12.2019
(51) Int. Cl.: B60R 13/08

(54) **SYSTÈME DE PROTECTION ACOUSTIQUE POUR PARE-BOUE DE VÉHICULE AUTOMOBILE**
SCHALLSCHUTZSYSTEM FÜR KRAFTFAHRZEUGKOTFLÜGEL
ACOUSTIC PROTECTION SYSTEM FOR MOTOR VEHICLE MUDGUARD

(30) Priorité: 18.12.2018 FR 1873257
(43) Date de publication de la demande: 27.10.2021
(73) Titulaire: TREVES PRODUCTS, SERVICES & INNOVATION, 75008 Paris (FR)
(72) Inventeur: DUVAL, Arnaud, 75008 Paris (FR); CRIGNON, Guillaume, 51500 Sillery (FR); ROUX, Maxime, 75008 Paris (FR)
(74) Mandataire: Sayettat, Julien Christian
(86) Numéro de dépôt international: PCT/EP2019/085411
(87) Numéro de publication internationale: WO 2020/127090

(56) Documents cités:
- EP-A1- 1 710 126
- EP-A1- 2 939 828
- EP-A1- 3 015 314
- EP-A1- 3 354 454
- EP-A2- 2 398 674
- US-A1- 2010 078 927
- Jean Allard ET AL: "266 MODELLING MULTILAYERED SYSTEMS WITH POROUS MATERIALS", , 23 novembre 2009 (2009-11-23), XP055613732, Extrait de l'Internet: URL:https://ebookcentral.proquest.com/lib/ epo-ebooks/reader.action?docID=470199&quer y=Sound%2Bpropagation%2Bin%2Bporous%2Bm%25 C3%25A9dia%2B [extrait le 2019-08-19] cité dans la demande

## Description

L'invention concerne un système de protection acoustique pour pare-boue de véhicule automobile et une garniture externe de pare-boue d'un tel système.

Il est connu de réaliser un système de protection acoustique pour pare-boue de véhicule automobile, ledit système comprenant, disposés successivement l'un sur l'autre :
- une paroi en tôle,
- une lame d'air,
- une garniture externe de pare-boue, ladite garniture comprenant :
   o une couche fibreuse poreuse d'absorption acoustique disposée en regard de ladite lame d'air,
   o une coque structurelle supportant ladite couche fibreuse, ladite coque présentant un module de Young supérieur à 1MPa.

Le document EP-2 398 674 décrit un système de protection acoustique pour pare-boue de véhicule automobile selon le préambule de la revendication 1.

On observe que la couche fibreuse poreuse d'absorption ne permet pas de réaliser une absorption optimale, notamment dans le domaine des moyennes fréquences.

En définitive, le système de protection acoustique connu ne permet de réaliser que de façon imparfaite une protection acoustique par absorption, aussi bien concernant le bruit interne qu'externe.

L'invention a pour but de pallier cet inconvénient.

A cet effet, l'invention propose un système de protection acoustique pour pare-boue de véhicule selon la revendication 1.

Avec l'agencement proposé :
- le fait d'utiliser une coque poreuse permet de réaliser une absorption du bruit extérieur,
- l'ajout d'une couche résistive sur la couche fibreuse poreuse d'absorption permet une optimisation de l'absorption du bruit intérieur, notamment dans le domaine des moyennes fréquences. En effet, le recouvrement de la couche d'absorption par une couche résistive, présentant une résistance au passage de l'air supérieure à celle de ladite couche d'absorption, permet de mettre en œuvre un effet « bi-perméable », tel que décrit notamment par J.F. Allard dans l'ouvrage « Sound propagation in porous média », Elsevier, 2nd edition 2009, p.266-271, un tel effet permettant, comme mentionné ci-dessus, d'optimiser l'absorption en moyennes fréquences,
- en outre, il a été observé de façon inattendue que la couche résistive contribue également aux performances d'isolation du système, comme explicité plus loin.

En définitive, le système de protection acoustique proposé permet de réaliser une protection acoustique par absorption optimisée, aussi bien concernant le bruit interne qu'externe, la couche résistive contribuant par ailleurs de façon inattendue aux performances d'isolation du système.

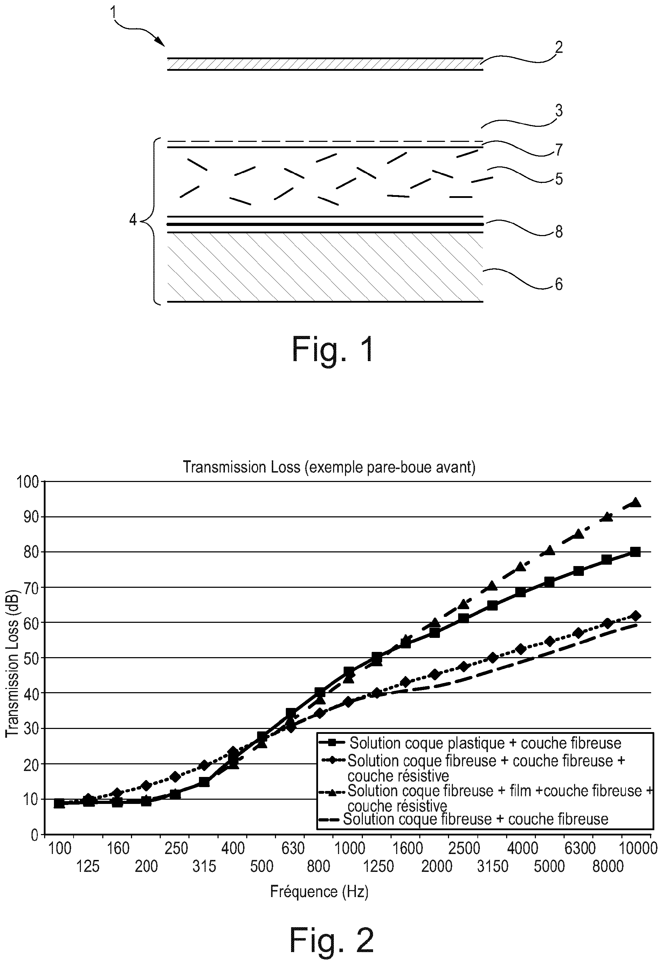

D'autres particularités et avantages de l'invention apparaîtront dans la description qui suit, faite en référence aux figures jointes, dans lesquelles :
- la figure 1 est une vue schématique partielle en coupe d'un système selon une réalisation intégrant un film ;
- la figure 2 présente le « Transmission Loss » (dB) en fonction de la fréquence (Hz), calculé par méthode des matrices de transfert, pour diverses configurations de garde-boue repérées sur le graphe :
   ∘ coque plastique + couche fibreuse,
   ∘ coque fibreuse + couche fibreuse + couche résistive,
   ∘ coque fibreuse + film + couche fibreuse + couche résistive,
   ∘ coque fibreuse + couche fibreuse
   la lame d'air présentant dans tous les cas une épaisseur de 10 mm, les différents constituants impliqués présentant les caractéristiques suivantes :
   ∘ coque plastique : masse surfacique = 1270 g/m²,
   ∘ couche fibreuse : masse surfacique = 150 g/m², épaisseur = 20 mm, résistance au passage de l'air = 250 N.s.m⁻³,
   ∘ coque fibreuse : masse surfacique = 1000 g/m², épaisseur = 4 mm, résistance au passage de l'air = 1000 N.s.m⁻³,
   ∘ couche résistive : masse surfacique = 100 g/m², résistance au passage de l'air = 500 N.s.m⁻³,
   ∘ film étanche : masse surfacique = 100 g/m²,

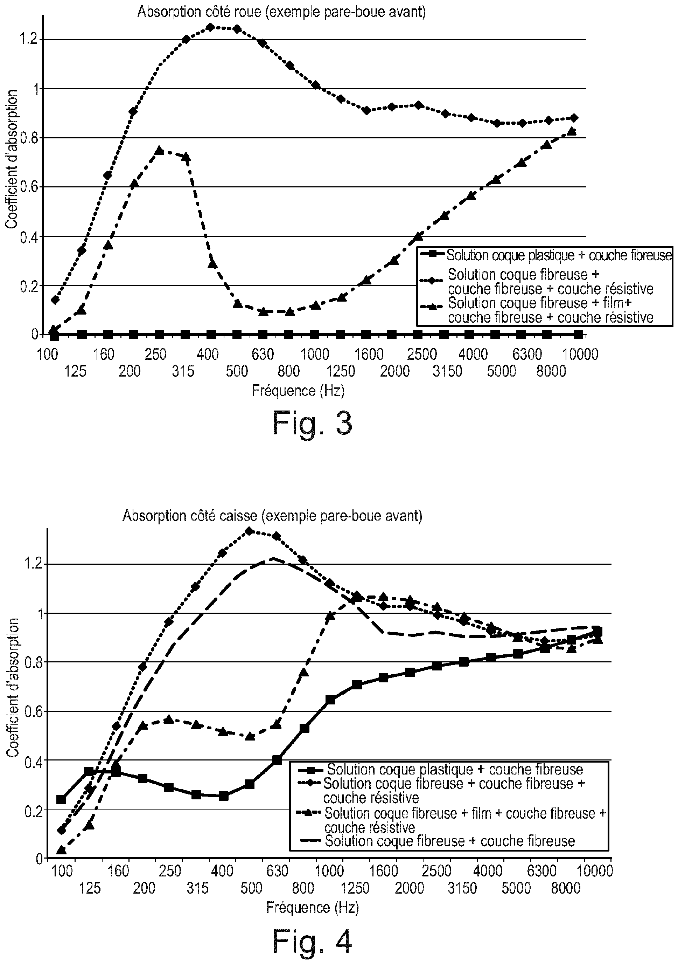

- la figure 3 présente le coefficient d'absorption en fonction de la fréquence (Hz) du côté roue, calculé par méthode des matrices de transfert, pour diverses configurations de garde-boue repérées sur le graphe :
   ∘ coque plastique + couche fibreuse,
   ∘ coque fibreuse + couche fibreuse + couche résistive,
   ∘ coque fibreuse + film + couche fibreuse + couche résistive, l'épaisseur de la lame d'air et les caractéristiques des différents constituants impliqués étant ceux utilisés pour la figure 2,
- la figure 4 présente le coefficient d'absorption en fonction de la fréquence (Hz) du côté tôle, calculé par méthode des matrices de transfert, pour diverses configurations de garde-boue repérées sur le graphe :
   ∘ coque plastique + couche fibreuse,
   ∘ coque fibreuse + couche fibreuse + couche résistive,
   ∘ coque fibreuse + film + couche fibreuse + couche résistive,
   ∘ coque fibreuse + couche fibreuse
   l'épaisseur de la lame d'air et les caractéristiques des différents constituants impliqués étant ceux utilisés pour la figure 2.

En référence à la figure 1, on décrit un système 1 de protection acoustique pour pare-boue de véhicule automobile, ledit système comprenant, disposés successivement l'un sur l'autre :
- une paroi 2 en tôle,
- une lame d'air 3,
- une garniture externe 4 de pare-boue, ladite garniture comprenant :
   ∘ une couche fibreuse 5 poreuse d'absorption acoustique disposée en regard de ladite lame d'air,
   ∘ une coque 6 structurelle supportant ladite couche fibreuse, ladite coque présentant un module de Young supérieur à 1 MPa,
ledit système présentant en outre les caractéristiques suivantes :
- ladite garniture comprend en outre une couche résistive 7 de résistance au passage de l'air comprise entre 200 et 2000 N.s.m⁻³, ladite résistance au passage de l'air étant supérieure à celle de ladite couche fibreuse, ladite couche résistive étant associée à ladite couche fibreuse à l'opposé de ladite coque,
- ladite coque est à base de fibres de structure liées entre elles par un agent de liaison, de manière à présenter une porosité lui conférant des propriétés d'absorption acoustique.

Selon une réalisation, la lame d'air 3 présente une épaisseur comprise entre 20 et 120 mm, et notamment entre 30 et 100 mm.

Selon une réalisation, la couche résistive 7 est à base de non-tissé ou d'un film thermoplastique multi-perforé.

Un non tissé peut par exemple être à base de microfibres de diamètre compris entre 1 et 10 microns, lesdites microfibres pouvant notamment être à base de polyester, polypropylène, cellulose ou polyamide.

Un film multi-perforé peut notamment comprendre entre 100 000 et 600 000 perforations/m², lesdites perforations pouvant présenter un diamètre compris entre 100 et 800 microns.

Selon une réalisation, la couche résistive 7 présente une masse surfacique comprise entre 30 et 200 g/m².

Selon une réalisation, la couche fibreuse 5 présente une épaisseur comprise entre 10 et 20 mm.

La couche fibreuse 5 est notamment sous forme de fibres entremêlées de façon aléatoire, à la façon d'un feutre, étant par exemple à base de fibres de polyester, lesdites fibres pouvant être des microfibres, par exemple de diamètre compris entre 1 et 10 microns.

Selon une réalisation, la couche fibreuse 5 présente une masse surfacique comprise entre 150 et 600 g/m², étant par exemple de l'ordre de 200 g/m².

Selon une réalisation, le système 1 comprend en outre un film 8 thermoplastique étanche d'isolation acoustique solidaire de la coque 6 et interposé entre la couche fibreuse 5 et ladite coque.

Selon une réalisation, le film 8 présente une épaisseur comprise entre 60 et 90 microns, étant par exemple de l'ordre de 70 microns.

Selon une réalisation, la coque 6 présente une masse surfacique comprise entre 800 et 1800 g/m², étant par exemple de l'ordre de 1200 g/m².

Selon une réalisation, la coque 6 présente une épaisseur comprise entre 3 et 6 mm, étant par exemple de l'ordre de 4 mm.

Selon une réalisation, les fibres de structure de la coque 6 comprennent :
- des fibres hélicoïdales creuses, par exemple en polyester, de titre compris par exemple entre 6 et 7 dtex,
- et/ou des microfibres de polyester téréphtalate de titre compris par exemple entre 1 et 1,7 dtex.

L'emploi de ce type de fibres permet d'augmenter la résistance au passage de l'air de la coque 6 sans augmenter son poids.

Selon une réalisation, l'agent de liaison de la coque 6 est formé par des fibres fusibles ou partiellement fusibles ayant subi une fusion, lesdites fibres étant :
- à base de polypropylène,
- ou étant de type bi-composant, avec un cœur infusible ou fusible à haute température et une gaine fusible à température modérée, étant par exemple à base de polyester.

Les fibres fusibles peuvent notamment représenter entre 30 et 50% du poids total de la coque 6.

Selon une réalisation, la résistance au passage de l'air de la coque 6 est comprise entre 1000 et 2000 N.s.m⁻³.

Selon une réalisation, la résistance au passage de l'air de la couche résistive 7 est comprise entre 200 et 600 N.s.m⁻³.

On présente ci-après un commentaire des figures 2 à 4.

En figure 2 :
- on observe que, à partir de 500 Hz environ, la réalisation de l'invention exempte de film est moins efficace en « Transmission Loss » que la solution de référence [coque plastique + couche fibreuse],
- en revanche, à partir de 1600 Hz environ, la réalisation de l'invention intégrant un film permet un meilleur « Transmission Loss » que la solution de référence [coque plastique + couche fibreuse],
- par comparaison de la solution [coque fibreuse + couche fibreuse + couche résistive] avec la solution [coque fibreuse + couche fibreuse], on observe en outre la pertinence inattendue de la couche résistive pour améliorer l'isolation, avec un gain de près de 3dB dès 1600 Hz ; il est observé par ailleurs, de façon non représentée, que dans la réalisation de l'invention avec film, le gain lié à la présence de la couche résistive sur le « Transmission Loss » est lui aussi très appréciable, de près de 3dB dès 1600 Hz ; ce gain est obtenu par la résistance au passage de l'air additionnelle apportée par la couche résistive.

En figure 3 :
- dans la mesure où aucune absorption n'est réalisée du côté roue pour la solution de référence [coque plastique + couche fibreuse], les deux réalisations selon l'invention, avec ou sans film, permettent de réaliser, de par la porosité de la coque, une absorption du côté roue qui n'existait pas avec ladite solution de référence,
- la meilleure performance en absorption du côté roue est obtenue par la réalisation de l'invention exempte de film comparativement à celle avec film, ledit film empêchant l'énergie d'être absorbée par la couche fibreuse ; cette version exempte de film est donc à privilégier si on souhaite améliorer l'absorption du côté roue.

En figure 4 :
- on observe globalement une bien meilleure performance en absorption du côté tôle avec les réalisations selon l'invention, avec ou sans film, qu'avec la solution de référence [coque plastique + couche fibreuse],
- par ailleurs, une comparaison des courbes [coque fibreuse + couche fibreuse + couche résistive] et [coque fibreuse + couche fibreuse] montre que la présence de la couche résistive permet d'améliorer l'absorption jusqu'à 4000 Hz,
- enfin, la réalisation de l'invention exempte de film est nettement plus efficace que celle avec film, ceci jusqu'à 1000 Hz environ.

## Revendications

1. Système (1) de protection acoustique pour pare-boue de véhicule automobile, ledit système comprenant, disposés successivement l'un sur l'autre :
- une paroi (2) en tôle,
- une lame d'air (3),
- une garniture (4) externe de pare-boue, ladite garniture comprenant :
• une couche fibreuse (5) poreuse d'absorption acoustique disposée en regard de ladite lame d'air,
• une coque (6) structurelle supportant ladite couche fibreuse, ladite coque présentant un module de Young supérieur à 1MPa,
- ladite garniture comprenant en outre une couche résistive (7) de résistance au passage de l'air comprise entre 200 et 2000 N.s.m⁻³, ladite résistance au passage de l'air étant supérieure à celle de ladite couche fibreuse,
- ladite coque étant à base de fibres de structure liées entre elles par un agent de liaison, de manière à présenter une porosité lui conférant des propriétés d'absorption acoustique, ledit système étant **caractérisé en ce que** ladite couche résistive est associée à ladite couche fibreuse à l'opposé de ladite coque.

2. Système selon la revendication 1, **caractérisé en ce que** la lame d'air (3) présente une épaisseur comprise entre 20 et 120 mm.

3. Système selon l'une des revendications 1 ou 2, **caractérisé en ce que** la couche résistive (7) est à base de non-tissé ou d'un film thermoplastique multi-perforé.

4. Système selon l'une quelconque des revendications 1 à 3, **caractérisé en ce que** la couche fibreuse (5) présente une épaisseur comprise entre 10 et 20 mm.

5. Système selon l'une quelconque des revendications 1 à 4, **caractérisé en ce que** la couche fibreuse (5) présente une masse surfacique comprise entre 150 et 600 g/m².

6. Système selon l'une quelconque des revendications 1 à 5, **caractérisé en ce qu'**il comprend en outre un film (8) thermoplastique étanche d'isolation acoustique solidaire de la coque (6) et interposé entre la couche fibreuse (5) et ladite coque.

7. Système selon l'une quelconque des revendications 1 à 6, **caractérisé en ce que** la coque (6) présente une masse surfacique comprise entre 800 et 1800 g/m².

8. Système selon l'une quelconque des revendications 1 à 7, **caractérisé en ce que** la résistance au passage de l'air de la coque (6) est comprise entre 1000 et 2000 N.s.m⁻³.

9. Système selon l'une quelconque des revendications 1 à 8, **caractérisé en ce que** la résistance au passage de l'air de la couche résistive (5) est comprise entre 200 et 600 N.s.m⁻³.

## Patentansprüche

1. Schallschutzsystem (1) für Kraftfahrzeugkotflügel, wobei das System sukzessive aufeinander angeordnet umfasst:
- eine Blechwand (2),
- eine Luftschicht (3),
- eine Außenverkleidung (4) des Kotflügels, wobei die Verkleidung umfasst:
• eine poröse Faserschicht (5) zur Schallabsorption, die gegenüber der Luftschicht angeordnet ist,
• eine die Faserschicht stützende Strukturhülle (6), wobei die Hülle ein Young-Modul von über 1 MPa aufweist,
- wobei die Verkleidung ferner eine Widerstandsschicht (7) mit einem Luftdurchstromwiderstand von zwischen 200 und 2000 N.s.m⁻³ umfasst, wobei der Luftdurchstromwiderstand höher als der der Faserschicht ist,
- wobei die Hülle auf untereinander durch ein Verbindungsmittel verbundenen Strukturfasern basiert, so dass sie eine Porosität aufweist, die ihr Schallabsorptionseigenschaften verleiht, wobei das System **dadurch gekennzeichnet ist, dass** die Widerstandsschicht gegenüber der Hülle mit der Faserschicht verbunden ist.

2. System nach Anspruch 1, **dadurch gekennzeichnet, dass** die Luftschicht (3) eine Dicke zwischen 20 und 120 mm aufweist.

3. System nach einem der Ansprüche 1 oder 2, **dadurch gekennzeichnet, dass** die Widerstandsschicht (7) auf Vlies oder einer mehrfach perforierten thermoplastischen Folie basiert.

4. System nach einem der Ansprüche 1 bis 3, **dadurch gekennzeichnet, dass** die Faserschicht (5) eine Dicke zwischen 10 und 20 mm aufweist.

5. System nach einem der Ansprüche 1 bis 4, **dadurch gekennzeichnet, dass** die Faserschicht (5) ein Flächengewicht von zwischen 150 und 600 g/m² aufweist.

6. System nach einem der Ansprüche 1 bis 5, **dadurch gekennzeichnet, dass** es ferner eine schalldichte thermoplastische Folie (8), die mit der Hülle (6) einstückig und zwischen der Faserschicht (5) und der Hülle angeordnet ist.

7. System nach einem der Ansprüche 1 bis 6, **dadurch gekennzeichnet, dass** die Hülle (6) ein Flächengewicht zwischen 800 und 1800 g/m² aufweist.

8. System nach einem der Ansprüche 1 bis 7, **dadurch gekennzeichnet, dass** der Luftdurchstromwiderstand der Hülle (6) zwischen 1000 und 2000 N.s.m⁻³ beträgt.

9. System nach einem der Ansprüche 1 bis 8, **dadurch gekennzeichnet, dass** der Luftdurchstromwiderstand der Widerstandsschicht (5) zwischen 200 und 600 N.s.m⁻³ beträgt.

## Claims

1. Acoustic protection system (1) for motor vehicle mudguard, said system comprising, disposed successively on one another:
- a wall (2) made from sheet metal,
- a layer of air (3),
- an external mudguard trim (4), said trim comprising:
• a porous fibrous acoustic-absorption layer (5) disposed facing said layer of air,
• a structural shell (6) supporting said fibrous layer, said shell having a Young's modulus greater than 1 MPa,
- said trim further comprising a resistive layer (7) with a resistance to the passage of air of between 200 and 2000 N.s.m⁻³, said resistance to the passage of air being greater than that of said fibrous layer,
- said shell being based on structural fibres connected together by a bonding agent, so as to have a porosity conferring thereon acoustic absorption properties, said system being **characterised in that** said resistive layer is associated with said fibrous layer opposite to said shell.

2. System according to claim 1, **characterised in that** the layer of air (3) has a thickness of between 20 and 120 mm.

3. System according to one of claims 1 or 2, **characterised in that** the resistive layer (7) is based on non-woven fabric or on a multi-perforated thermoplastic film.

4. System according to any one of claims 1 to 3, **characterised in that** the fibrous layer (5) has a thickness of between 10 and 20 mm.

5. System according to any one of claims 1 to 4, **characterised in that** the fibrous layer (5) has a mass per unit surface of between 150 and 600 g/m².

6. System according to any one of claims 1 to 5, **characterised in that** it further comprises an impervious thermoplastic acoustic-insulation film (8) secured to the shell (6) and interposed between the fibrous layer (5) and said shell.

7. System according to any one of claims 1 to 6, **characterised in that** the shell (6) has a mass per unit surface of between 800 and 1800 g/m².

8. System according to any one of claims 1 to 7, **characterised in that** the resistance to the passage of air of the shell (6) is between 1000 and 2000 N.s.m⁻³.

9. System according to any one of claims 1 to 8, **characterised in that** the resistance to the passage of air of the resistive layer (5) is between 200 and 600 N.s.m³.
